# EUROPÄISCHE PATENTSCHRIFT

(11) **EP 0 553 619 B1**
(45) Veröffentlichungstag und Bekanntmachung des Hinweises auf die Patenterteilung: **11.03.1998**
(21) Anmeldenummer: 93100192.9
(22) Anmeldetag: 08.01.1993
(51) Int. Cl.: B60K 13/04, F41H 7/02, F01N 7/08, F01N 7/14

(54) **Abgasanlage für ein gepanzertes Fahrzeug**
Exhaust system for an armoured vehicle
Système d'échappement d'un véhicule blindé

(30) Priorität: 28.01.1992 DE 4202232
(43) Veröffentlichungstag der Anmeldung: 04.08.1993
(73) Patentinhaber: THYSSEN INDUSTRIE AG, 45128 Essen (DE)
(72) Erfinder: Konrath, Rainer, Dipl.-Ing., W-3500 Kassel (DE); Smith, Terence Martin, W-3523 Grebenstein (DE)

(56) Entgegenhaltungen:
- DE-A- 3 221 378
- DE-C- 347 164
- US-A- 2 960 178

## Beschreibung

Die Erfindung betrifft eine Abgasanlage für ein mittels einer Brennkraftmaschine angetriebenes, gepanzertes Fahrzeug nach den Merkmalen des Oberbegriffs des Anspruchs 1.

Bei einem gepanzerten Fahrzeug mit an der Fahrzeuglängsseite angeordneter Abgasaustrittsöffnung ist es bekannt, die heißen Abgase der Brennkraft-Antriebsmaschine vor dem Ausströmen ins Freie mit der Abluft der Kühlanlage zu vermischen, um dadurch die Temperatur der Abgase

herabzusetzen (DE 39 11 142 A1). Da jedoch schon die Temperatur der Abluft der Kühlanlage zwangsläufig höher ist als die Umgebungstemperatur, führt auch die Vermischung von heißen Abgasen mit der Abluft der Kühlanlage immer zur Erhöhung der Temperatur im Bereich der Abgasaustrittsöffnung und damit zu Temperaturdifferenzen, die einer IR-Ortung zugänglich sind.
Das gilt auch für die Abgasanlage eines gepanzerten Kraftfahrzeuges nach der DE-OS 21 30 757, bei der die Vermischung der heißen Abgase der Brennkraft-Antriebsmaschine mit der Abluft der Kühlanlage außerhalb des Fahrzeugs am Fahrzeugheck vorgenommen wird, wobei die in Fahrzeugquerrichtung geführten heißen Abgase auf die in Fahrzeuglängsrichtung ausströmende Abluft treffen.

Zur Verminderung der IR-Ortbarkeit von gepanzerten Fahrzeugen ist man bestrebt die im Betrieb heißen Abgasaustrittsöffnungen des Fahrzeuggehäuses von mit Brennkraft-Antriebsmaschinen angetriebenen Fahrzeugen der direkten Sicht von rundum und von oben zu entziehen. Dies geschieht beispielsweise durch Abführen der Abgase der Brennkraft-Antriebsmaschine nach unten durch im Boden des Fahrzeuggehäuses angeordnete Öffnungen.

Ein Abführen der Abgase der Brennkraft-Antriebsmaschine durch bodenseitig angeordnete Öffnungen im Fahrzeuggehäuse eines gepanzerten Fahrzeugs ist aus der Patentschrift DE 32 21 378 C2 bekannt. Dort werden die heißen Abgase, vermischt mit der aus dem abgeschlossenen Motorraum zu entfernenden Warmluft, durch einen den Boden des Fahrzeuggehäuses großflächig überdeckenden Abgaskanal auf eine Vielzahl von im Boden des Fahrzeuggehäuses angebrachten vergitterten Öffnungen verteilt und nach unten ins Freie abgeführt.

Als nachteilig wird bei der bekannten Abgasanlage angesehen, daß der großflächig ausgeführte Abgaskanal mit seiner Höhe den Fahrzeuginnenraum - bei vergleichbarer gleichgroßer Bodenfreiheit und Fahrzeughöhe - beträchtlich verkleinert. Nachteilig ist auch, daß der Fahrzeuginnenraum von unten her durch die heißen Abgase aufgeheizt wird. Dadurch wird eine bodenseitig anzubringende Isolierung mit Wärmedämmstoffen erforderlich, die nochmals den Fahrzeuginnenraum verkleinert. Auch erschwert der Einbau des nahezu über den größten Teil des Bodens reichenden Abgaskanals den in diesem Bereich bei gepanzerten Kettenfahrzeugen in der Regel üblichen Einbau der langen Drehstäbe der Laufrollenfedern. Schließlich besteht noch die Gefahr, daß sich bei einem flächigen Aufsetzen des Fahrzeugbodens in schwierigem Gelände, wie Sand oder Schlamm, die bodenseitig angeordneten Abgasöffnungen ganz oder teilweise verstopfen und somit die Leistungsabgabe der Brennkraft-Antriebsmaschine durch in der Abgasanlage steigenden Abgasgegendruck verringert und im Extremfall blockiert wird.

Von daher liegt der Erfindung die Aufgabe zugrunde, die Abgasanlage für ein gepanzertes Fahrzeug der eingangs genannten Art so zu gestalten, daß der Fahrzeuginnenraum möglichst wenig eingeengt wird und daß für extreme Fahrsituationen, wie Aufsetzen des Fahrzeugbodens auf Sand oder Schlamm, eine die Leistung der Brennkraft-Antriebsmaschine mindernde Erhöhung des Abgasgegendrucks vermieden wird.

Diese Aufgabe wird durch die kennzeichnenden Merkmale des Anspruchs 1 gelöst.

Die mit der Erfindung erzielten Vorteile bestehen darin, daß das gepanzerte Fahrzeug im Normalbetrieb einen rundum und von oben wirksamen IR-Ortungsschutz hat und daß mit der raumsparend angeordneten zusätzlichen und verschließbaren, außerhalb des Fahrzeugbodens ins Freie führenden Abgasleitung bei extremen Bodenverhältnissen (Aufsetzen auf Sand oder Schlamm) unter teilweisem Verzicht auf IR-Ortungsschutz unzulässige Erhöhungen des Abgasgegendruckes vermieden und damit die Beweglichkeit des gepanzerten Fahrzeugs erhalten werden.
Vorteilhaft ist bei dem Abführen der Abgase nach unten auch die damit erreichte Abgasgeräuschminderung.

Vorteilhafte Ausgestaltungen der Erfindung erfolgen durch die kennzeichnenden Merkmale der Ansprüche 2 bis 4.

Mit dem Verschließen der größeren Durchgangsöffnung durch die bodenseitig angeordnete Klappe wird im Bedarfsfall das Eindringen von größeren Mengen Sand oder Schlamm in die nach unten führende Abgasleitung verhindert. Die bei geschlossener großer Durchgangsöffnung offen bleibende kleinere Durchgangsöffnung dient als Entwässerungsöffnung für die Abgasleitung. Die offene kleinere Durchgangsöffnung ermöglicht auch den Start und den Leerlauf der Brennkraft-Antriebsmaschine, wenn die Klappe an der untenliegenden größeren Durchgangsöffnung und die Klappe an der zusätzlichen, außerhalb des Bodens des Fahrzeuggehäuses ins Freie führenden Öffnung der Abgasanlage gleichzeitig geschlossen sind.
Die Schließbewegungen der Klappen werden gesteuert in Abhängigkeit von der mit Drucksensor ermittelten Höhe des Abgasgegendruckes und/oder in Abhängigkeit von der Höhe des unterhalb des Fahrzeuggehäuses vorhandenen, durch Tast- oder Abstandssensoren ermittelten Freiraums.

Ein Ausführungsbeispiel der Erfindung ist in der Zeichnung dargestellt und wird im folgenden näher beschrieben.

Es zeigt
- Fig. 1: einen senkrechten Längsschnitt durch den vorderen Teil eines gepanzerten Fahrzeugs mit Kettenantrieb (bodenseitige Abgasklappe geöffnet),
- Fig. 2: einen senkrechten Längsschnitt wie Fig. 1, jedoch bodenseitige Abgasklappe geschlossen,
- Fig. 3: einen senkrechten Schnitt A-A' von Fig. 1 in Fahrzeug-Querrichtung,
- Fig. 4: eine Einzelheit von Fig. 1 in vergrößerter und vervollständigter Darstellung.

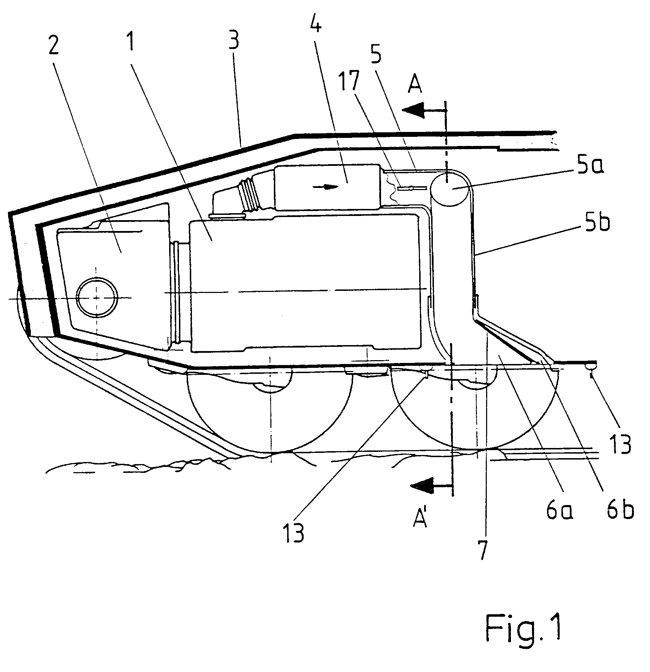

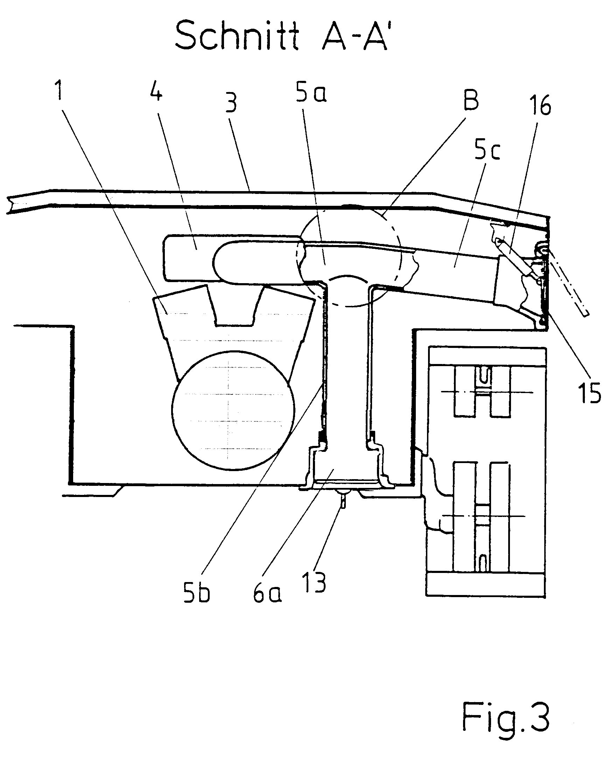

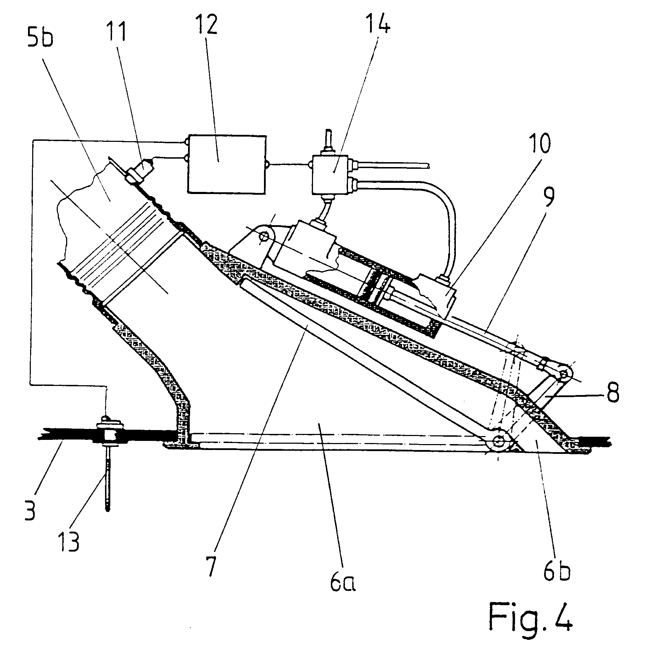

Bei dem in Fig. 1 dargestellten vorderen Teil eines gepanzerten Fahrzeugs mit Kettenantrieb ist die Brennkraft-Antriebsmaschine 1 mit angeflanschtem Fahrzeuggetriebe 2 in üblicher, nicht weiter dargestellter Weise im Fahrzeuggehäuse 3 gelagert. Oberhalb der Brennkraft-Antriebsmaschine 1 ist deren Abgasschalldämpfer 4 angeordnet, von dem aus die heißen Abgase durch die Abgasleitung 5 weitergeführt werden. In der Abgasleitung 5 befindet sich eine Tiefwatklappe 17. Die Abgasleitung 5 ist mit einer Rohrverzweigung 5a versehen, von der aus ein Abgasleitungsabschnitt 5b nach unten zu einer bodenseitigen Öffnung des Fahrzeuggehäuses 3 und ein zusätzlicher Abgasleitungsabschnitt 5c seitwärts zu einer Öffnung in der Seitenlängswand des Fahrzeuggehäuses 3 führen. Der von der Rohrverzweigung 5a (siehe Einzelheit "B" in Fig. 3) weiterführende zusätzliche Abgasleitungsabschnitt 5c kann auch zu anderen, nicht zum Boden des Fahrzeuggehäuses 3 gehörenden Bereichen, wie z.B. zum Dach oder zum Heck, geführt werden. Der nach unten führende Abgasleitungsabschnitt 5b hat an seinem untenliegenden freien Ende zwei nebeneinanderliegende unterschiedlich große Durchgangsöffnungen 6a und 6b, die wechselweise mit einer Klappe 7 verschließbar sind (siehe Fig. 4). Die Klappe 7 ist mit einem Hebel 8 an der Kolbenstange 9 eines zweiseitig mit einem Druckmedium beaufschlagbaren Betätigungszylinders 10 gelenkig befestigt.
An dem nach unten führenden Abgasleitungsabschnitt 5b ist ein Drucksensor 11 angebracht, der über eine entsprechende Leitung mit einer Auswerteelektronik 12 verbunden ist. An der Unterseite des Fahrzeuggehäuses sind in Fahrtrichtung vor und hinter den nach unten weisenden Durchgangsöffnungen 6a und 6b Tast- oder Abstandssensoren 13 angebracht, die ebenfalls über entsprechende Leitungen mit der Auswerteelektronik 12 verbunden sind. Die Auswerteelektronik 12 steht in Wirkverbindung mit dem Steuerventil 14 des Kolbenzylinders 10.

Das freie Ende des im Ausführungsbeispiel seitwärts geführten zusätzlichen Abgasleitungsabschnitts 5c ist ebenfalls mit einer Klappe 15 versehen, die über einen Kolbenzylinder 16 betätigbar ist (siehe Fig. 3).

Die größere Durchgangsöffnung 6a ist bei Stillstand der Brennkraft-Antriebsmaschine 1 durch die Klappe 7 verschlossen. Während des Betriebs der Brennkraft-Antriebsmaschine wird der Öffnungsgrad der Klappe 7 durch den Drucksensor 11, der den Abgasgegendruck mißt, gesteuert.

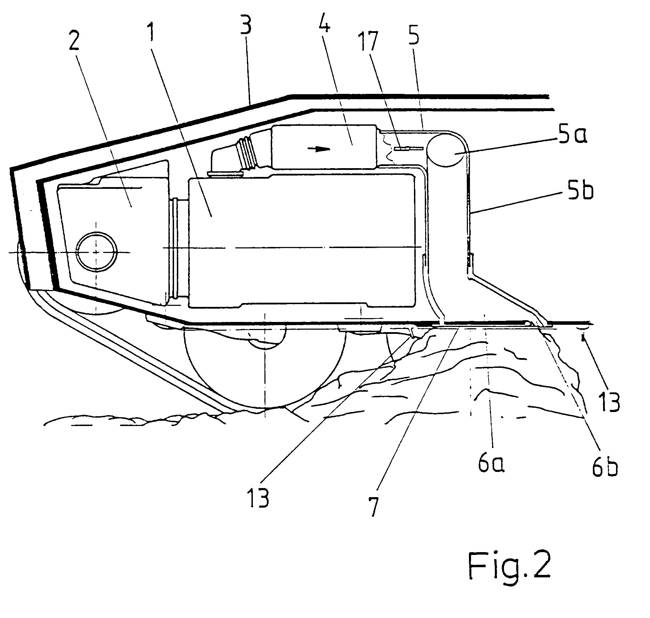

Bei geringem Abgasgegendruck (geringe Abgasmenge und kleine Strömungsgeschwindigkeit) ist die Klappe 7 nahezu geschlossen. Es muß allerdings in diesem Betriebszustand ein freier Querschnitt verbleiben, der die Ausströmgeschwindigkeit nicht größer werden läßt als bei maximaler Abgasmenge und vollständig geöffneter Klappe 7. Bei hohem Abgasgegendruck (großer Abgasmenge und hohe Strömungsgeschwindigkeit) ist die Klappe 7 vollständig geöffnet. Wird während des Betriebes der Brennkraft-Antriebsmaschine 1 ein bestimmter Abgasgegendruck überschritten, z.B. bei Bodenaufsetzern, wie in Fig. 2 dargestellt, so wird die Klappe 7 geschlossen. Das vom Drucksensor 11 gegebene Signal kann gleichzeitig genutzt werden, um die am freien Ende des zusätzlichen Abgasleitungsabschnittes 5c angeordnete Klappe 15 mittels des entsprechend zu beaufschlagenden Kolbenzylinders 16 zu öffnen. Das Schließen der untenliegenden Klappe 7 bei Bodenaufsetzern (siehe Fig. 2) kann zusätzlich durch Tast- oder Abstandssensoren 13 gesteuert werden, die in Fahrtrichtung vor und hinter der Klappe 7 an der Unterseite des Fahrzeuggehäuses 3 angeordnet sind.

Die am freien Ende des nach unten führenden Abgasleitungsabschnitts 5b befindliche kleinere Durchgangsöffnung 6b ist immer dann offen, wenn die große Durchgangsöffnung 6a durch die Klappe 7 geschlossen ist oder sich die Klappe 7 in einer Zwischenstellung befindet. Es ist also bei geschlossener großer Durchgangsöffnung 6a durch die dann offene kleinere Durchgangsöffnung 6b noch soviel freier Querschnitt in der Abgasleitung vorhanden, daß der Start und der Leerlauf der Brennkraft-Antriebsmaschine möglich ist. Schließlich dient die kleinere Durchgangsöffnung 6b in der vorstehend beschriebenen Situation auch zur Entwässerung der Abgasleitung.

## Patentansprüche

1. Abgasanlage für ein mittels einer Brennkraftmaschine angetriebenes, gepanzertes Fahrzeug, mit der die Abgase der Brennkraft-Antriebsmaschine zur Verminderung der IR-Ortbarkeit durch zumindest eine im Boden des Fahrzeuggehäuses angeordnete Öffnung nach unten ins Freie geführt werden, dadurch gekennzeichnet, daß in der Abgasanlage eine Rohrverzweigung (5a) angeordnet ist, von der aus ein erster, mit einer Klappe (7) zumindest größtenteils verschließbarer Abgasleitungsabschnitt (5b) zu der zumindest einen bodenseitigen Öffnung des Fahrzeuggehäuses (3) führt und ein zusätzlicher, mit einer Klappe (15) verschließbarer, zweiter Abgasleitungsabschnitt (5c) an einer Öffnung im Fahrzeuggehäuse (3) endet, die sich außerhalb des Bodens an einer anderen Außenfläche des Fahrzeuggehäuses (3) befindet.

2. Abgasanlage nach Anspruch 1, dadurch gekennzeichnet, daß das bodenseitige Ende des nach unten führenden ersten Abgasleitungsabschnitts (5b) zwei unterschiedlich große Durchgangsöffnungen (6a und 6b) aufweist, die wechselweise mit der Klappe (7) verschließbar sind.

3. Abgasanlage nach Anspruch 1 oder 2, dadurch gekennzeichnet, daß die Schließstellungen der fremdkraftbetätigten Klappen (7 und 15) in Abhängigkeit vom Abgasgegendruck über einen den Abgasgegendruck messenden Drucksensor (11) und eine Auswerteelektronik (12) steuerbar sind.

4. Abgasanlage nach einem der Ansprüche 1 bis 3, dadurch gekennzeichnet, daß die Schließstellungen der Klappen (7 und 15) in Abhängigkeit vom verfügbaren Freiraum unterhalb des Bodens des Fahrzeuggehäuses (3) über Tast- oder Abstandssensoren (13) und die Auswerteelektronik (12) steuerbar sind.

## Claims

1. Exhaust gas system for an armoured vehicle driven by an internal combustion engine, whereby for reduced IR traceability the exhaust gases of the i.c. driving engine are conveyed into the open air down through at least one opening disposed in the base of the vehicle housing, characterized in that disposed in the exhaust gas system is a manifold (5a), from which a first exhaust gas line portion (5b) closable at least for the most part by means of a flap (7) leads to the at least one opening in the base of the vehicle housing (3) and an additional second exhaust gas line portion (5c) closable by means of a flap (15) terminates at an opening in the vehicle housing (3) situated outside of the base at a different outer surface of the vehicle housing (3).

2. Exhaust gas system according to claim 1, characterized in that the bottom end of the downward-extending first exhaust gas line portion (5b) has two through-openings (6a and 6b) of differing size which are alternately closable by means of the flap (7).

3. Exhaust gas system according to claim 1 or 2, characterized in that the closing positions of the remotely operated flaps (7 and 15) are controllable in dependence upon the exhaust gas back-pressure by means of a pressure sensor (11), which measures the exhaust gas back-pressure, and an electronic evaluation device (12).

4. Exhaust gas system according to one of claims 1 to 3, characterized in that the closing positions of the flaps (7 and 15) are controllable in dependence upon the free space available under the base of the vehicle housing (3) by means of tactile or ranging sensors (13) and the electronic evaluation device (12).

## Revendications

1. Système ou installation de gaz d'échappement d'un véhicule blindé entraîné par un moteur à combustion interne, système à l'aide duquel, pour diminuer la localisabilité des rayons infrarouges, les gaz d'échappement du moteur à combustion interne sont acheminés, par l'intermédiaire d'au moins une ouverture ménagée dans le bas de la carrosserie, vers le bas à l'air libre, système caractérisé en ce que l'installation d'échappement de gaz comporte une ramification de tuyau (5a) d'où un premier tronçon (5b) de conduit de gaz d'échappement, obturable au moins pour sa plus grande partie à l'aide d'un clapet (7), conduit à au moins une ouverture, ménagée du côté du bas de caisse, de la carrosserie du véhicule et un second tronçon supplémentaire (5b) de conduit de gaz d'échappement, obturable par un clapet (15), débouche dans une ouverture ménagée dans la caisse ou carrosserie (3) du véhicule qui se trouve à l'extérieur du bas du véhicule sur une autre surface extérieure de la carrosserie (3) du véhicule.

2. Système ou installation de gaz d'échappement selon la revendication 1, caractérisé en ce que l'extrémité, du côté du bas, du premier tronçon (5b) du conduit d'échappement de gaz se dirigeant vers le bas présente deux orifices de passage (6a et 6b) de grandeur différente et qui peuvent être alternativement obturés par le clapet (7).

3. Système ou installation de gaz d'échappement selon la revendication 1 ou 2, caractérisé en ce que les positions de fermeture des clapets (7 et 15) actionnés par télécommande sont commandables, en fonction de la contre-pression des gaz d'échappement, à l'aide d'un capteur (11) de pression mesurant la contre-pression des gaz d'échappement et d'une électronique (12) d'exploitation des mesures de ce capteur.

4. Système ou installation de gaz d'échappement selon l'une des revendications 1 à 3, caractérisé en ce que les positions de fermeture des clapets (7 et 15) sont commandables, en fonction de l'espace libre disponible au-dessous du bas de la caisse ou carrosserie (3) du véhicule, à l'aide de palpeurs ou de capteurs de distance (13) et d'une électronique (12) d'exploitation des données recueillies par le capteur.
